Europäisches Patentamt

(19) European Patent Office

Office européen des brevets

(11) Publication number: **0 135 268**
**B1**

(12) **EUROPEAN PATENT SPECIFICATION**

(45) Date of publication of patent specification: **25.05.88**

(51) Int. Cl.⁴: **B 23 K 37/04**

(21) Application number: **84304433.0**

(22) Date of filing: **28.06.84**

(54) Apparatuses for creep control of rotating drums.

(30) Priority: **28.06.83 GB 8317503**

(43) Date of publication of application:
**27.03.85 Bulletin 85/13**

(45) Publication of the grant of the patent:
**25.05.88 Bulletin 88/21**

(84) Designated Contracting States:
**DE FR GB IT SE**

(56) References cited:
**FR-A-2 297 113**
**GB-A- 760 127**
**US-A-3 008 439**
**US-A-3 480 158**

(73) Proprietor: **Babcock Power Limited**
**Maypole House 128-132, Borough High Street**
**London SE1 4YB (GB)**

(72) Inventor: **Hamill, Anthony Charles**
**9, Bradrill Drive**
**Bishop Briggs Glasgow Scotland (GB)**

(74) Representative: **Sinnett, Richard Albert Edward**
**c/o Babcock International plc. 165, Great Dover Street**
**London SE1 4YA (GB)**

Courier Press, Leamington Spa, England.

## Description

This invention arose from a consideration of the problems involved in the welding together end-to-end of drums. In a known technique for so welding thick-walled drums having diameters between, say, 1.2m and 4.6m., the drums rest on rollers end-to-end and with their axes aligned. Bridging members are then connected internally to both drums to hold them together so that they can then be rotated as a unit about their axis on the rollers during the welding process. To deposit a weld that will occupy the entire thickness of the walls, many rotations of the drums may be necessary.

If either or both drums are not exactly true to their common axis, or the rollers on which the drums turn are not precisely positioned or have their axes at all out of parallel with the drum axis, then the drums are liable to creep, in the sense of moving axially as they rotate. Whilst the creep may be only in the order to 1 cm. per rotation, this can obviously be inimical to the formation of a reliable weld.

It may also happen that the axes of the two drums are not in precise alignment. Unless it is sufficient that the drums, when connected together by bridging members, should be supported on rollers at only two locations, then the means that provides additional support must be able to accommodate this lack of alignment. The present invention is concerned with means by which creep may be countered and embodiments of the invention are such that support can be provided throughout the rotation of the drums at more than two locations even though the drums that are connected together are somewhat out of true.

Prior art shows apparatus by which a tube can be supported on rollers so that it can be rotated for welding. In U.S. 3 480 158, the rollers are separately mounted on a common base so that the axis of the tube can be shifted but only by the separate movement of each of the rollers. In U.S 3 008 549, the rollers can be moved as a unit, and only as a unit, but the movement can be only transversely or up-and-down.

By the present invention there is provided a support on which a drum may rest whilst being rotated about its axis, the support including rollers on which the drum may lie, the rollers (25) being spaced apart transversely of the axis and each rotating about an axis that can be moved parallel to itself and to the axis about which its drum turns, characterised in that the rollers are mounted on a single carriage, the carriage is tiltably carried by a base so that the inclination of the carriage in a plane transverse to the axes of the rollers may be adjusted, and means being provided by which adjustment of the inclination of the carriage relatively to the base may be effected.

The use of a single tiltable carriage provides a ready facility for the compensation of creep that develops during operation since both rollers can be moved simultaneously by equal and opposite amounts. There is no need to try to make separately complementary movements of two independent rollers, or to alter one roller and then try to make an appropriate compensatory movement of the other roller. Whilst what is described in U.S. 3 480 158 may be efficient in the positioning of pipes, and accommodating the need for the rotation of pipes during welding, it is not intended for the correction of creep and the use of what is described there for such a purpose is not suggested in the specification.

Again, the disclosure in U.S. 3 008 439 is not intended or suggested for use in the correction of creep and the provision of two separate movements at right angles to each other, whilst enabling the position of the tube to be adjusted to any extent, means that the adjustment would be too slow and cumbersome to respond to the needs of creep correction.

It is the great merit of the present invention that by merely tilting the single carriage on which the rollers are mounted slightly, creep movement can be followed and compensated for. Moreover, little additional load has to be accommodated by the movement of the carriage for whatever compensation is needed can be achieved by a comparatively small tilt of the carriage.

By way of example an embodiment of the invention will now be described in which:

Figure 1 is a sketch illustrating in side view two drums held together end-to-end and mounted on supports which enable them to be rotated during welding;

Figure 2 is a front view of the support shown at the left hand end of Figure 1;

Figure 3 is a plan view of the support shown in Figure 2;

Figure 4 is a side view from the right of Figure 3;

Figure 5 is a front view of. each of the two central supports shown in Figure 1;

Figure 6 is a plan view of the support shown in Figure 5; and

Figure 7 is a side view from the right of Figure 6.

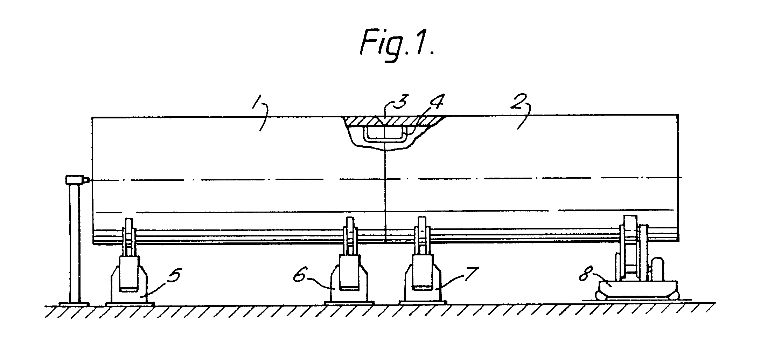

In Figure 1 there are indicated two thick-walled drums 1 and 2 ready for welding end-to-end. The ends are chamfered to provide a groove 3 in which weld material is to be deposited during several rotations of the drums.

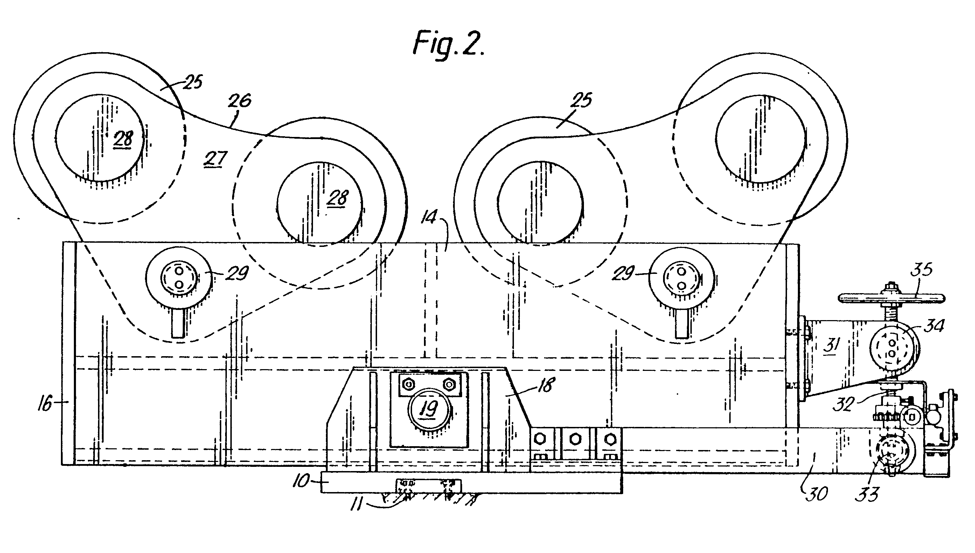

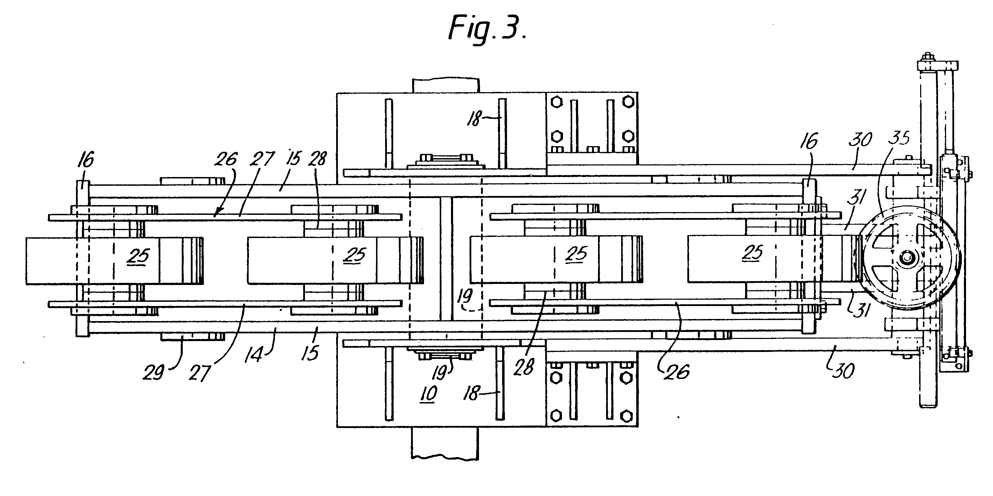

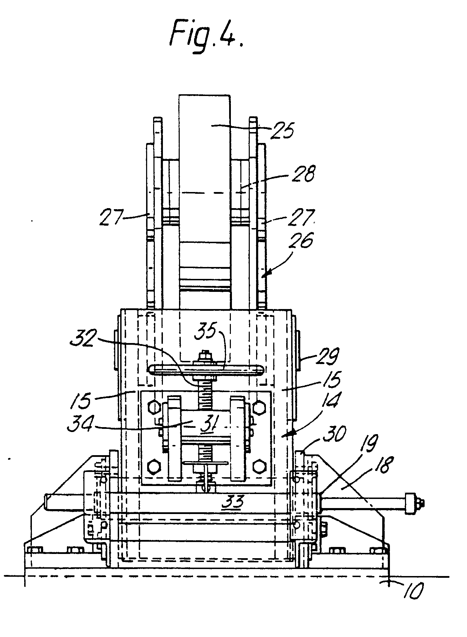

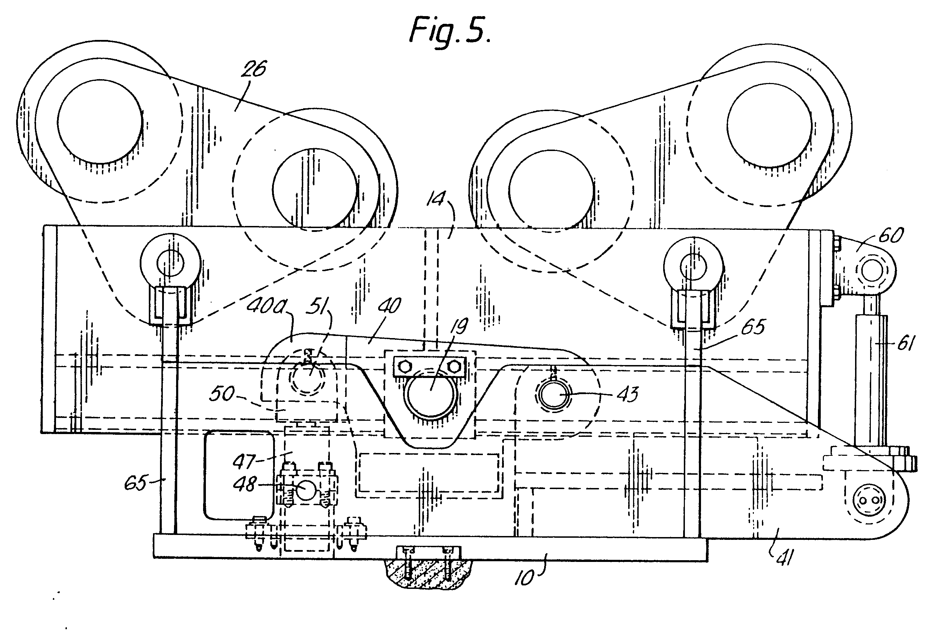

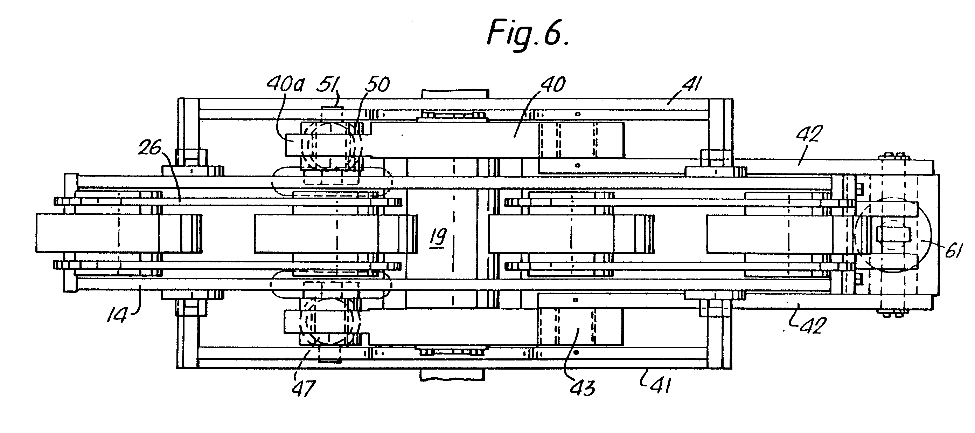

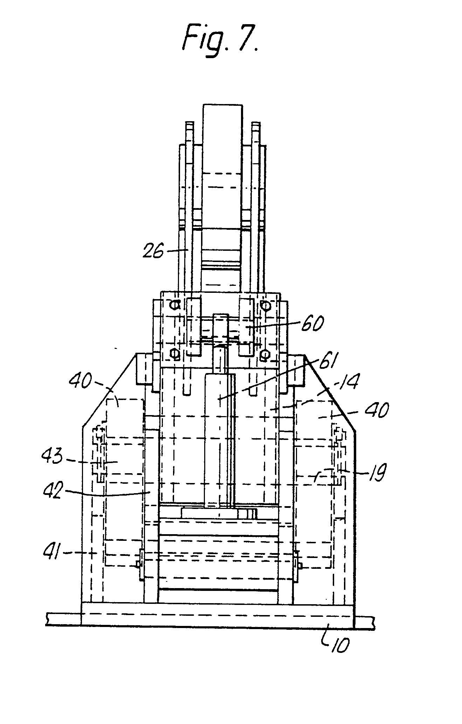

Each of the drums is borne by two supports installed on the floor of a workshop — drum 1 on supports 5 and 6 and drum 2 on supports 7 and 8. Each support is provided with rollers on which the drums are cradled. Support 8 is of a known kind and may be called a driver. It provides means by which one, at least, of the rollers on which the drum rests may be rotated so that, through its frictional engagement with the drum, the drum may be rotated about its axis with the axis remaining in a fixed position. Support 5 is illustrated in Figures 2 to 4 and supports 6 and 7 are each as illustrated in Figures 5 to 7.

The support 5 which may be called a creep control support, includes a base 10 that is bolted, at 11, to the work shop floor. A rocker carriage 14 is mounted on the base 10.

The rocker carriage 14 is in the form of an elongated rectangular box extending transversely of the drum 2. It comprises side plates 15 rigidly connected together by end plates 16. For the mounting of the rocker carriage 14, the base 10 is provided with two bracket constructions 18 between which is fixed a spindle 19 that passes through the side plates 15 and forms an axle on which the rocker carriage 14 can oscillate in a plane perpendicular to the axis of the drum.

To provide a cradle for the tube 1, the rocker carriage 14 is provided with four rollers 25 arranged in pairs, carried in a roller bracket 26. Each bracket comprises a pair of plates 27 that are generally triangular, right-angled and isosceles. Each pair of plates 27 is held together by two spindles 28, on one of each of which a roller 25 can rotate between the plates 27. The roller brackets 26 lie between the side plates 15 of the rocker carriage 14 and each is mounted on a spindle 29 extending between the side plates 15 and passing through the "right-angle" corner of the plates 15. Since the roller brackets 26 can rock relatively to the rocker carriage 14, they can cradle the drum throughout a range of variations in the position of the axis of the drum relatively to the rocker carriage 14.

Means are provided by which the rocker carriage 14 can be tilted to a small controlled extent about its spindle 19. This means includes a base strut 30 extending to one side of the rocker carriage 14 and fixed to the base 10 and a bracket 31 fixed to the rocker carriage 14 and extending above the base strut 30. A screw shaft 32 is captive in a swivel 33 mounted in the base strut 30 and rotatable in and through a swivel 34 mounted in the bracket 31. A handle 35 enables the screw shaft 32 to be rotated to vary the tilt of the rocker carriage 14.

The supports 6 and 7 are illustrated in Figures 5 to 7. Each includes a base 10, a rocker carriage 14 and roller brackets 26 so similar to those shown in Figures 2 to 4 that they may be denoted by the same reference numerals. In Figures 5 to 7, however, the rocker carriage 14 is mounted on the base in such a way that its height above the base 10 can be varied and the carriage 14 can rock in response to loads applied to it by the tube that is cradled on it.

As in the previous embodiment, a spindle 19 passes through the rocker carriage 14 but its ends are fixed to floating plates 40 lying outside the rocker carriage 14 between the carriage 14 and side strut walls 41 that extend upright from the base 10, parallel to, and for much of the length of, the rocker carriage 14. Base struts 42 extend parallel to the walls 41 and project to one side of the rocker carriage 14 and at one end each plate 40 is pivotally mounted on a spindle 43 that extends between a side strut wall 41 and a base strut 42.

At their other ends, each plate 40 is supported by a hydraulic cylinder 47 that is fixed to the base 10 through means 48 that permit a small degree of oscillation of the cylinder 47. The upper end of the cylinder 47 carries a fork 50 in which a thinned portion 40a of the plate 40 is received and to which it is connected by a pivot pin 51.

From the end of the rocker carriage 14, there projects a bracket 60 and a hydraulic cylinder 61 is pivotally connected at one end to the bracket 60 and at the other end to the base strut 42.

By operating on both of the cylinders 47 and 61 separately, the height and inclination of the rocker carriage 14 can be set initially whilst in subsequent operation they will act as hydraulic springs to accommodate small variations in the height of the drum that rests on it. Cylinder 61 may be seen as a creep control cylinder and the cylinders 47 may be called equalising cylinders. The equalising cylinders 47 are single acting with a stroke of about 7.5 cms; each will support a load of about 20 tonnes and have a hydraulic pressure requirement of about 3 tonnes per sq. cm. The creep control cylinder 61 is double acting with a stroke of about 25 cms. In Figure 5, 65 denotes columns extending upward from the base 10. The rocker carriage 14 can tilt relatively to the columns 65 but is laterally supported by them.

In using the apparatus that has been described, the drum 1 is rested on supports 5 and 6 and the drum 2 on supports 7 and 8. The rocker carriage 14 of supports 6 and 7 are then adjusted in height and inclination, by appropriate operation of the cylinders 47 and 61, to ensure that the axes of the drums 1 and 2 are as nearly aligned as possible. Bridging pieces 4 are then welded temporarily internally to the drums 1 and 2 to hold them together until the final annular weld has been completely deposited.

To effect the final weld, the united drums are rotated and it is desirable that during this rotation creep should be kept to a minimum. Creep is controlled by the support 5. By adjustment of the handle 35 the axis of the drum can be tilted to the optimum position for the reduction of creep. This setting might be retained throughout the completion of the weld but it is envisaged that, using sensing devices to detect variations in the orientation of the axis of the drums, adjustment may be made during any complete rotation of the drums or after a number of rotations.

Throughout rotation of the drums during the welding process, the supports 6 and 7 are continually effective for the cylinders 47 and 61 act as hydraulic springs so allowing the height of the drums to sink below a maximum and yet tending to restore them to that position.

By using tilting of the rocker carriage 14, correction for creep is effected essentially by lateral movement of the axis of the drums and, in this way only a comparatively small force is needed. By the use of hydraulic cylinders, in place of the screw shaft 32, control could be effected remotely.

In modifications of the supports shown in Figures 2 to 7, each roller bracket 26 and the rollers 25 that it carries could be replaced by a single roller of which that axis is fixed relatively to the rocker carriage 14. By using a large number of rollers, the risk of serious indentation of the drum is reduced, however.

**Claims**

1. A support (5) on which a drum (1) may rest whilst being rotated about its axis, the support including rollers (25) on which the drum (1) may lie, the rollers (25) being spaced apart transversely of the axis and each rotating about an axis that can be moved parallel to itself and to the axis about which its drum turns, characterised in that the rollers (25) are mounted on a single carriage (14), the carriage (14) is tiltably carried by a base (10) so that the inclination of the carriage (14) in a plane transverse to the axes (28) of the rollers may be adjusted, and means (35, 61) being provided by which adjustment of the inclination of the carriage (14) relatively to the base (10) may be effected.

2. A support as claimed in claim 1 characterised in that the carriage is pivotably mounted on a spindle (19) that is fixed relatively to the base (10).

3. A support as claimed in claim 2 characterised in that the means (35, 61) by which adjustment of the inclination of the carriage (14) may be effected is such as to hold the carriage (14) in the position relative to the base (10) to which it is adjusted.

4. A support as claimed in claim 1 characterised in that the carriage (14) is tiltably carried by the base (10) by arms (40) lying one on each side of the carriage (14) and on which the carriage is pivotably mounted, the arms being pivotally connected to the base (10) at a common axis (43) spaced apart from that (19) at which the carriage is connected to the arms and being provided with means (61) by which the orientation of the arms to the base may be varied.

5. A support as claimed in claim 4 characterised in that the means by which the orientation of the arms to the base may be varied includes a hydraulic cylinder (61).

6. A support as claimed in either of claims 4 and 5 characterised in that a hydraulic cylinder extends between the carriage (14) and the base (10) so that the orientation of the carriage relative to the base may be varied.

7. A support as claimed in any of the preceding claims characterised in that there are four rollers (25) arranged in two pairs, each pair being mounted on a bracket (27) pivotally connected to the carriage to pivot about an axis parallel to the axis (19) about which the carriage can tilt, the brackets (27) being symmetrically disposed relatively to that axis and the rollers (25) being so arranged that a drum of the appropriate diameter resting on the rollers makes contact with each.

**Patentansprüche**

1. Stütze (5), auf welcher eine Trommel (1) aufruhen kann, während sie um ihre Achse gedreht wird, weist Rollen (25) auf, auf welchen die Trommel (1) liegt; die Rollen (25) sind in Querrichtung der Achse im Abstand voneinander angeordnet, und jede Rolle dreht sich um eine Achse, die parallel zu sich selbst und zu der Drehachse der Trommeln verschoben werden kann, dadurch gekennzeichnet, daß die Rollen (25) auf einem einzelnen Wagen (14) montiert sind, daß der Wagen (14) schwenkbar zu einem Grundgestell (10) gelagert ist, so daß die Neigung des Wagens (14) in einer Ebene Quer zu den Achsen (28) der Rollen eingestellt werden kann, und daß eine Einrichtung (35, 61) vorgesehen ist, durch welche die Neigung des Wagens (14) relativ zu dem Grundgestell (10) bewirkt werden kann.

2. Stütze nach Anspruch 1, dadurch gekennzeichnet, daß der Wagen auf einer Achse (19) schwenkbar befestigt ist, welche gerätefest (10) angeordnet ist.

3. Stütze nach Anspruch 2, dadurch gekennzeichnet, daß die Einrichtung (35, 61) zur Einstellung der Neigung des Wagens (14) derart ausgebildet ist, daß sie den Wagen (14) in einer Lage relativ zum Grundgestell (10) hält, zu welchem er eingestellt wird.

4. Stütze nach Anspruch 1, dadurch gekennzeichnet, daß der Wagen (14) in dem Grundgestell (10) über Arme (14) schwenkbar gelagert ist, von denen jeweils ein Arm auf jeder Seite des Wagens (14) angeordnet ist und auf welchen der Wagen schwenkbar montiert ist, daß die Arme schwenkbar mit dem Grundgestell (10) über eine gemeinsame Achse (43) verbunden sind, die von der Achse (19) eintfernt liegt, über welche der Wagen mit den Armen verbunden ist, und daß der Apparat mit einer Einrichtung (61) versehen ist, durch welche die Ausrichtung der Arme zu dem Grundgestell veränderbar ist.

5. Stütze nach Anspruch 4, dadurch gekennzeichnet, daß die Einrichtung zur Ausrichtung der Arme relativ zum Grundgestell einen hydraulischen Zylinder (61) einschließt.

6. Stütze nach Anspruch 4 oder 5, dadurch gekennzeichnet, daß ein hydraulischer Zylinder sich zwischen dem Wagen (14) und dem Grundgestell (10) erstreckt, so daß die Ausrichtung des Wagens relativ zu dem Grundgestell veränderbar ist.

7. Stütze nach einem der vorhergehenden Ansprüche, dadurch gekennzeichnet, daß vier Rollen (25) in zwei Paaren angeordnet sind, daß jedes Paar auf einem Lagerbock (27) montiert ist, der schwenkbar mit dem Wagen verbunden ist, um eine Achse parallel zu der Achse (19) zu schwenken, um welche der Wagen schwenken kann, daß die Lagerböcke (27) symmetrisch relativ zu dieser Achse angeordnet sind und daß die Rollen (25) so angeordnet sind, daß eine auf den Rollen aufruhende Trommel geeigneten Durchmessers mit jeder der Rollen in Berührung steht.

**Revendications**

1. Appui (5) sur lequel un cylindre (1) peut reposer tandis qu'on le fait tourner autour de son axe, l'appui comprenant des rouleaux (25) sur lesquels le cylindre (1) peut séjourner, ces rouleaux (25) étant écartés l'un de l'autre transversalement à l'axe et chacun tournant autour d'un axe qui peut être déplacé parallèlement à lui-même et par rapport à l'axe autour duquel son cylindre tourne, caractérisé en ce que les rouleaux (25) sont montés sur un seul affût (14), l'affût (14) est porté en bascule par un socle (10) de telle manière que l'inclinaison de l'affût (14) dans un plan transversal aux axes (28) des rouleaux peut être réglée, des moyens (35, 61) étant disposés grâce auxquels peut être effectué le réglage de l'inclinaison de l'affût (14) relativement au socle (10).

2. Appui selon la revendication 1 caractérisé en ce que l'affût est monté articulé sur un arbre (19) qui est fixe par rapport au socle (10).

3. Appui selon la revendication 2 caractérisé en ce que les moyens (35, 61) grâce auxquels le réglage de l'inclinaison de l'affût (14) peut être effectué sont adaptés pour maintenir l'affût (14) dans la position par rapport au socle (10) à laquelle il a été réglé.

4. Appui selon la revendication 1 caractérisé en ce que l'affût (14) est porté en bascule par le socle (10) au moyen de bras (40) situés chacun de chaque côté de l'affût (14) et sur lesquels l'affût est monté avec possibilité de tourner, les bras étant reliés sur pivot au socle (10) par un axe commun (43) écarté à distance de celui (19) par leque l'affût est relié aux bras et étant munis de moyens (47) grâce auxquels l'orientation des bras par rapport au socle peut être changée.

5. Appui selon la revendication 4 caractérisé en ce que le moyen grâce auquel l'orientation des bras par rapport au socle peut être changée comprend un cylindre hydraulique (61).

6. Appui selon l'une quelconque des revendications 4 et 5 caractérisé en ce qu'un cylindre hydraulique s'étend entre l'affût (14) et le socle (10) de telle manière que l'orientation de l'affût par rapport au socle peut être changée.

7. Appui selon l'une quelconque des revendications précédentes caractérisé en ce qu'il y a quatre rouleaux (25) agencés en deux paires, chaque paire étant montée sur un support (27) relié sur pivot à l'affût pour tourner autour d'un axe parallèle à l'axe (19) autour duquel l'affût peut s'incliner, les supports (27) étant disposés symétriquement par rapport à cet axe et les rouleaux (25) étant agencés de telle manière qu'un cylindre du diamètre approprié reposant sur les rouleaux est en contact avec chacun d'eux.

# Fig.1.

Fig.2.

0 135 268

Fig.3.

0 135 268

## Fig.4.

Fig. 5.

*Fig.6.*

# Fig. 7.